# FASCICULE DE BREVET EUROPEEN

(11) **EP 1 850 973 B1**
(45) Date de publication et mention de la délivrance du brevet: **23.12.2009**
(21) Numéro de dépôt: 05810814.3
(22) Date de dépôt: 10.10.2005
(51) Int. Cl.: B07C 3/14

(54) **PROCEDE DE TRAITEMENT D'ENVOIS POSTAUX AVEC UNE DETECTION DES OCCURRENCES D'ATTRIBUTS OCR**
VERFAHREN ZUR BEARBEITUNG VON POSTGUT MIT OPTISCHER ZEICHENERKENNUNG OCR
METHOD FOR PROCESSING POSTAL ITEMS WITH OPTICAL CHARACTER RECOGNITION OCR

(30) Priorité: 08.02.2005 FR 0550369
(43) Date de publication de la demande: 07.11.2007
(73) Titulaire: Solystic, 94257 Gentilly Cedex (FR)
(72) Inventeur: DESPREZ, Olivier, F-78000 VERSAILLES (FR); CAILLON, Christophe, F-91220 BRETIGNY SUR ORGE (FR); METTE, Emmanuel, F-95210 SAINT-GRATIEN (FR)
(74) Mandataire: Prugneau, Philippe
(86) Numéro de dépôt international: PCT/FR2005/050837
(87) Numéro de publication internationale: WO 2006/084966

(56) Documents cités:
- EP-B- 1 222 037
- FR-A- 2 841 673

## Description

L'invention concerne un procédé de traitement d'envois postaux dans une machine de tri ayant des sorties de tri avec des bacs de sortie de tri dans lesquels sont dirigés les envois lors des passes de tri successives,
dans lequel lors d'une première passe de tri des envois postaux, on forme une image numérique de chaque envoi postal comportant une information d'adresse pour reconnaître automatiquement notamment par OCR ("Optical character Recognition") l'adresse de l'envoi, on dérive de cette image une empreinte numérique qui est un identifiant logique pour l'envoi et on enregistre en mémoire des données d'adresse représentatives de l'adresse de l'envoi reconnue automatiquement en correspondance avec l'empreinte numérique de l'envoi et un identifiant logique de bac de sortie de tri dans lequel est dirigé l'envoi,
et dans lequel lors d'une seconde passe de tri des envois postaux, on forme de nouveau une image numérique d'un envoi courant comportant l'information d'adresse de l'envoi courant, on dérive de cette image une empreinte numérique pour l'envoi courant et on recherche parmi les empreintes numériques enregistrées en première passe de tri une concordance avec l'empreinte numérique de l'envoi courant pour récupérer notamment les données d'adresse représentatives de l'information d'adresse de l'envoi courant.

Plus particulièrement, l'invention concerne un procédé de tri automatique d'envois postaux en plusieurs passes de tri sur une ou plusieurs machines de tri dans lequel il n'est pas nécessaire d'apposer (par impression avec ou sans étiquette) sur les envoi postaux, un identificateur d'envoi (appelé « chronomarque ou Tag-Id dans la littérature courante), notamment un identificateur sous la forme d'un code à barres. Dans le procédé selon l'invention, les envois sont identifiés par une empreinte numérique ou signature d'image comme décrit dans le document de brevet européen EP1222037. L'utilisation d'empreintes numériques ou signatures d'image pour identifier les envois pendant les passes de tri successives permet d'éviter l'utilisation de périphériques d'impression et de lecture de codes à barres, l'utilisation de périphériques de vérification de la qualité d'impression des codes à barres (appelés BCV dans la littérature courante), l'utilisation d'étiqueteuses pour coller des étiquettes sur les envois postaux ayant une surface en matière plastique (notamment pour les envois du type objets plats tels que magasines et journaux) et il en résulte ainsi une économie substantielle sur le coût de la machine de tri et le coût de sa maintenance mais aussi sur les consommables pendant l'exploitation de la machine.

Dans le document de brevet EP1222037, on appose sur une paroi de chaque bac de sortie de tri un code à barres servant d'identifiant pour le bac. Lors de la seconde passe de tri, on lit le code des bacs chargés en entrée de la machine et on fait une association entre ces bacs et les empreintes numériques des envois contenus dans ces bacs pour que, lors de la recherche de concordance en seconde passe entre l'empreinte numérique d'un envoi courant et les empreintes numériques enregistrées en première passe, on exploite un espace d'exploration qui est limité aux empreintes des envois d'un seul bac de sortie de tri de première passe de façon à répondre aux exigences d'un traitement temps réel. Mais dans ce procédé connu, le principe utilisé pour réduire l'espace d'exploration des empreintes numériques ne tolère pas que des envois, contenus dans plusieurs bacs de sortie de tri issus d'une première passe de tri dans une machine, soient transbordés dans un seul bac pour être recyclés en entrée d'une autre machine pour poursuivre la seconde passe de tri. Avec ce procédé connu, il n'est pas possible non plus d'avoir des ruptures de séquence des bacs, par exemple le fait d'introduire en seconde passe de tri des envois contenus dans un bac qui n'est pas un bac de sortie de tri issu de la première passe de tri. Avec ce procédé connu, il est impératif de conserver en seconde passe, l'ordre relatif des envois dans chaque bac recyclé en entrée de la machine de tri. Ce procédé connu ne résiste donc pas aux perturbations qui peuvent survenir dans le magasin d'alimentation de la machine de tri, par exemple à la suite d'un bourrage de la machine.

Le but de l'invention est de proposer un procédé pour trier des envois postaux en plusieurs passes de tri qui exploite des empreintes numériques pour identifier les envois postaux et qui n'est pas sensible aux contraintes d'exploitation indiquées plus haut.

A cet effet, l'invention a pour objet un procédé de traitement d'envois postaux dans une machine de tri ayant des sorties de tri avec des bacs de sortie de tri dans lesquels sont dirigés les envois lors des passes de tri successives,
dans lequel lors d'une première passe de tri des envois postaux, on forme une image numérique de chaque envoi postal comportant une information d'adresse pour reconnaître automatiquement l'adresse de l'envoi, on dérive de cette image une empreinte numérique qui est un identifiant logique pour l'envoi et on enregistre en mémoire des données d'adresse représentatives de l'adresse de l'envoi reconnue automatiquement en correspondance avec l'empreinte numérique de l'envoi et un identifiant logique de bac de sortie de tri dans lequel est dirigé l'envoi,
et dans lequel lors d'une seconde passe de tri des envois postaux, on forme de nouveau une image numérique d'un envoi courant comportant l'information d'adresse de l'envoi courant, on dérive de cette image une empreinte numérique pour l'envoi courant et on recherche parmi les empreintes numériques enregistrées en première passe de tri une concordance avec l'empreinte numérique de l'envoi courant,
**caractérisé en ce que** lors de la seconde passe de tri,
- on effectue également une reconnaissance automatique d'adresse à partir de l'image de l'envoi courant pour obtenir des données d'adresse représentatives de l'adresse de l'envoi courant,
- on recherche parmi les données d'adresse enregistrées en mémoire une concordance avec les données d'adresse de l'envoi courant pour identifier, à partir des identifiants logiques de bac de sortie de tri, un bac courant de sortie de tri de première passe de tri auquel correspond l'envoi courant de sorte que pour rechercher une concordance entre deux empreintes numériques on effectue cette recherche de concordance d'empreintes numériques dans un espace d'exploration formé par les empreintes numériques qui correspondent audit bac courant de sortie de tri.

L'idée à la base du procédé selon l'invention est donc d'identifier automatiquement des bacs d'envois grâce à la reconnaissance par OCR de quelques envois du bac pour réduire l'espace d'exploration des empreintes. Le procédé selon l'invention s'applique à un traitement dans lequel les passes de tri successives peuvent être faites sur plusieurs machines de tri (y compris avec une segmentation du type tri acheminement/tri distribution) équipées de bacs de sortie de tri simples ou compartimentés. Le procédé selon l'invention s'applique à un traitement d'envois dans lequel la recherche de concordance d'empreintes sert à récupérer des données indicatives de l'information d'adresse mais peut de la même façon s'appliquer à un traitement d'envois dans lequel la recherche de concordance d'empreintes sert à réaliser un suivi (traçabilité) des envois dans les machines.

Le procédé selon l'invention peut présenter les particularités suivantes :
- pour identifier un bac courant de sortie de tri de première passe de tri, on comptabilise pour des envois successifs les occurrences pour lesquelles on obtient une concordance entre des données d'adresse ;
- si on ne détecte pas de concordance entre l'empreinte numérique de l'envoi courant et les empreintes numériques formant l'espace d'exploration, on met en attente l'envoi courant et on recommence la recherche de concordance d'empreintes numériques pour cet envoi courant après une mise à jour de l'espace d'exploration avec des empreintes numériques qui correspondent à un autre bac de sortie de tri de première passe de tri ;
- on comptabilise le nombre de fois qu'un envoi courant est mis en attente et on met en rejet l'envoi courant si on détecte que le nombre de fois que cet envoi courant a été mis en attente est supérieur à un certain seuil.

Un exemple d'un mode de mise en oeuvre du procédé selon l'invention est décrit plus en détail ci-après et illustré par les dessins. Cette description n'est donnée qu'à titre d'exemple indicatif et nullement limitatif de l'invention.
La figure 1 illustre de façon très schématique un envoi postal.
La figure 2 montre de façon schématique une machine de tri pour la mise en oeuvre du procédé selon l'invention.
La figure 3 illustre sous la forme d'un organigramme le déroulement du procédé selon l'invention lors d'une première passe de tri.
La figure 4 illustre l'organisation des données en mémoire de la machine de tri.
La figure 5 illustre sous la forme d'un organigramme le déroulement du procédé selon l'invention lors d'une seconde passe de tri.

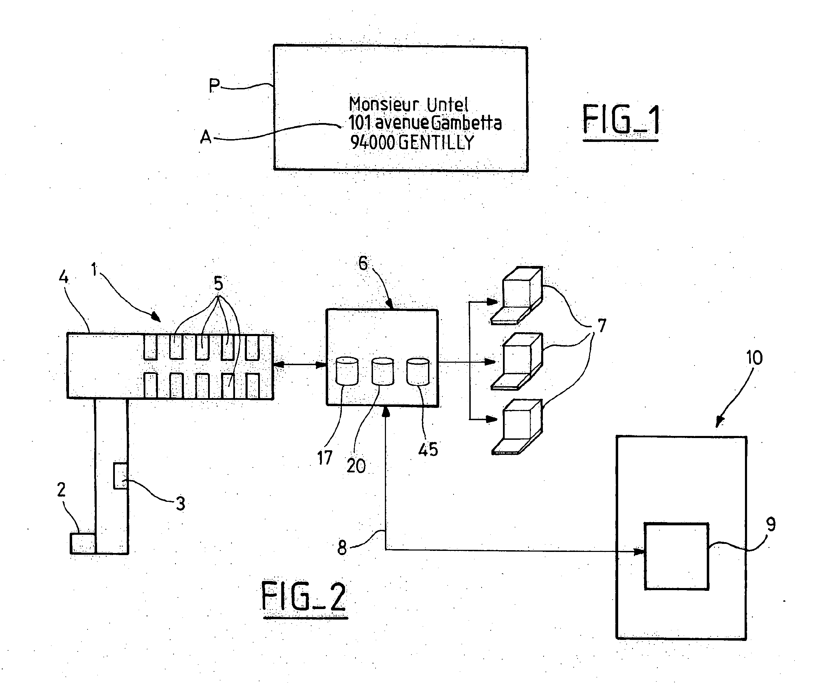

Sur la figure 1, on a illustré un envoi postal P comportant une information d'adresse de distribution A. Cet envoi postal peut être une lettre simple ou un objet plat petit ou grand format tel qu'un magasine, un journal, un catalogue avec enveloppe en plastique ou en papier.

Sur la figure 2, on a représenté schématiquement une machine de tri 1 mettant en oeuvre le procédé selon l'invention.

La machine de tri 1 comprend classiquement une entrée d'alimentation 2 avec un magasin et un dépileur pour la mise en série sur chant d'envois postaux tels que P, une caméra numérique 3 pour l'acquisition de l'image de la surface de chaque envoi postal P comportant l'information d'adresse de distribution A et un carrousel à godets 4 qui dirige les envois vers des sorties de tri munies chacune d'un bac de sortie de tri 5. Chaque sortie peut être équipée de plusieurs bacs (typiquement un bac avant et un bac arrière) de sortie de tri ou d'un bac compartimenté sans sortir du cadre de l'invention.

Sur la figure 2, on a également représenté par 6 un système de traitement de données associé à un système de vidéo-codage 7. Les systèmes 6 et 7 constituent un système de reconnaissance d'adresse par OCR qui à partir d'une image d'un envoi P formée par la caméra 3, extrait automatiquement ou via l'intervention d'un opérateur de vidéo-codage, l'information d'adresse A sur la base de laquelle est déterminée une destination de tri pour l'envoi qui correspond à une sortie de tri de la machine. En outre le système 6 est agencé selon l'invention pour dériver de chaque image numérique d'un envoi formée par la caméra 3 une empreinte numérique ou signature d'image constituant un identificateur logique pour l'envoi.

Sur la figure 2, on a également représenté par 9 un système analogue au système 6 mais qui fait partie d'une autre machine de tri 10, ce système 9 étant relié en communication par exemple par un réseau de télécommunication 8 au système 6, pour une application du procédé selon l'invention à un processus de tri en plusieurs passes de tri sur plusieurs machines de tri.

Dans le procédé selon l'invention, les envois sont triés en plusieurs passes de tri, par exemple en deux passes de tri.

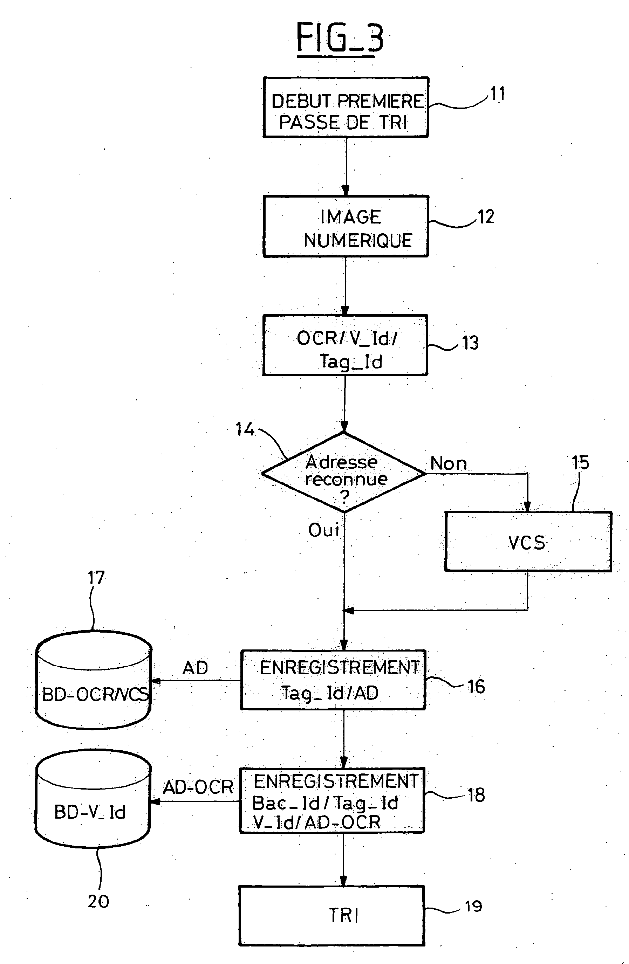

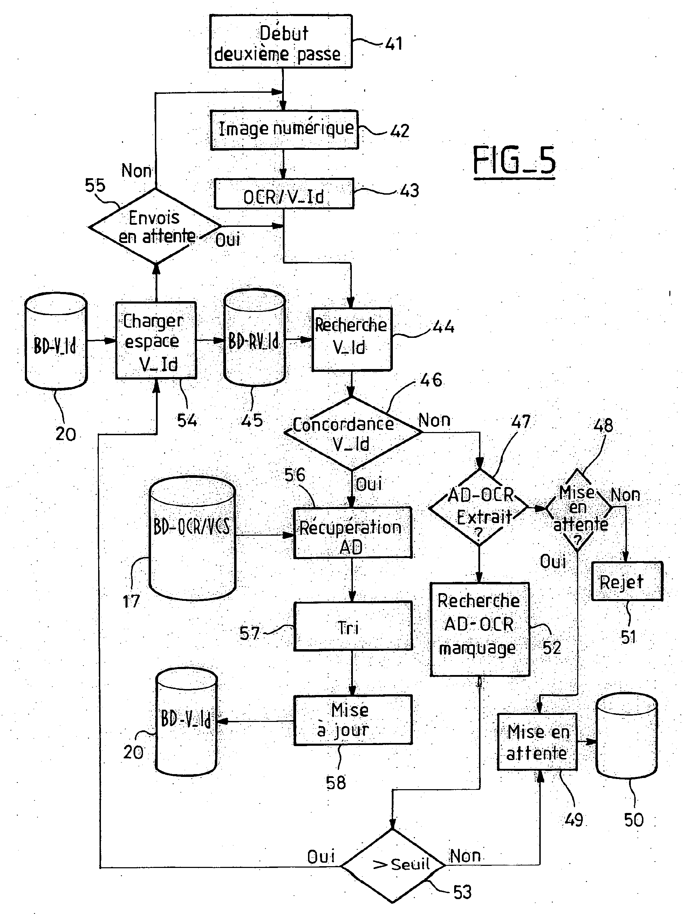

Les figures 3 et 5 représentent respectivement les étapes du procédé selon l'invention pour une première passe de tri et pour une seconde passe de tri sur une seule machine telle que 1.

En se référant à la figure 3, dans l'étape initiale 11 on prépare du courrier à trier en entrée de la machine 1 et on charge des bacs vides dans les sorties de tri de la machine. Des identifiants logiques Bac-Id sont affectés en mémoire par la machine 1 à chaque bac de sortie de tri. Comme exemple d'identifiant logique pour un bac, on peut utiliser par exemple ,une concaténation des informations suivantes : Identificateur de site de tri/Numéro de machine de tri/Numéro de sortie de tri dans la machine/Date/Heure.

Dans l'étape 12, les envois sont dépilés et mis en série pour passer devant la caméra 3. Une image de la surface de chaque envoi est formée et enregistrée en mémoire dans le système 6.

En 13, sur la base de l'image d'un envoi, on effectue une reconnaissance automatique par OCR de l'information d'adresse A en même temps qu'on dérive dans le calculateur 6, à partir de l'image de l'envoi, une empreinte numérique V-Id servant d'identificateur logique pour l'envoi. Dans le système 6, un autre identificateur logique pour l'envoi, par exemple sous la forme d'un numéro telle qu'une chronomarque Tag-Id, peut être également attribué à l'envoi.

Dans l'étape 14, si on obtient une information d'adresse A univoque par la reconnaissance automatique d'adresse par OCR, les données AD représentatives de cette information d'adresse pour l'envoi considéré avec le numéro temporaire d'envoi Tag-Id sont enregistrés en correspondance en mémoire dans l'étape 16. Sur la figure 3, on a représenté par 17 une base de données indiquée par BD-OCR/VCS dans laquelle sont enregistrés en correspondance pour chaque envoi, le numéro temporaire Tag-Id attribué à l'envoi et les données représentatives de l'adresse de l'envoi, le numéro Tag-id servant de clé d'accès dans la base pour la récupération ultérieure des données d'adresse lors d'une seconde passe de tri. A l'étape 14, si le résultat de la reconnaissance automatique d'adresse par OCR donne un résultat partiel, c'est-à-dire une information d'adresse de distribution équivoque, ou encore aucun résultat, l'image numérique de l'envoi est envoyée (étape 15) vers le système de vidéo-codage 7 pour une extraction de l'information d'adresse par un opérateur de codage vidéo, après quoi les données d'adresse extraites à travers le système 7 sont enregistrées en correspondance avec un numéro temporaire d'envoi Tag-Id dans la base 17 à l'étape 16.

Selon le procédé de l'invention, à l'étape 18 on enregistre également pour l'envoi considéré dans une base de données 20 d'empreintes numériques (appelée BD-VID) l'empreinte numérique V-Id de l'envoi (issue de l'étape 13) en correspondance avec les données d'adresse obtenues automatiquement par OCR (à l'étape 13), le numéro temporaire de l'envoi Tag-Id et l'identifiant logique Bac-Id de bac de sortie de tri dans lequel est dirigé l'envoi. Les données d'adresse enregistrées dans la base de données 20 sont des données obtenues exclusivement par la reconnaissance automatique d'adresse par OCR, c'est à dire sans l'intervention d'un opérateur de codage vidéo.

A l'étape 19, la première passe de tri se poursuit par le convoyage de l'envoi vers la sortie de tri correspondante de la machine et le déchargement de l'envoi dans le bac de cette sortie de tri. Ce processus se reboucle (non représenté) à l'étape 13 pour chaque envoi postal dépilé en entrée de la machine avec le cas échéant une gestion des bacs pleins durant la première passe de tri.

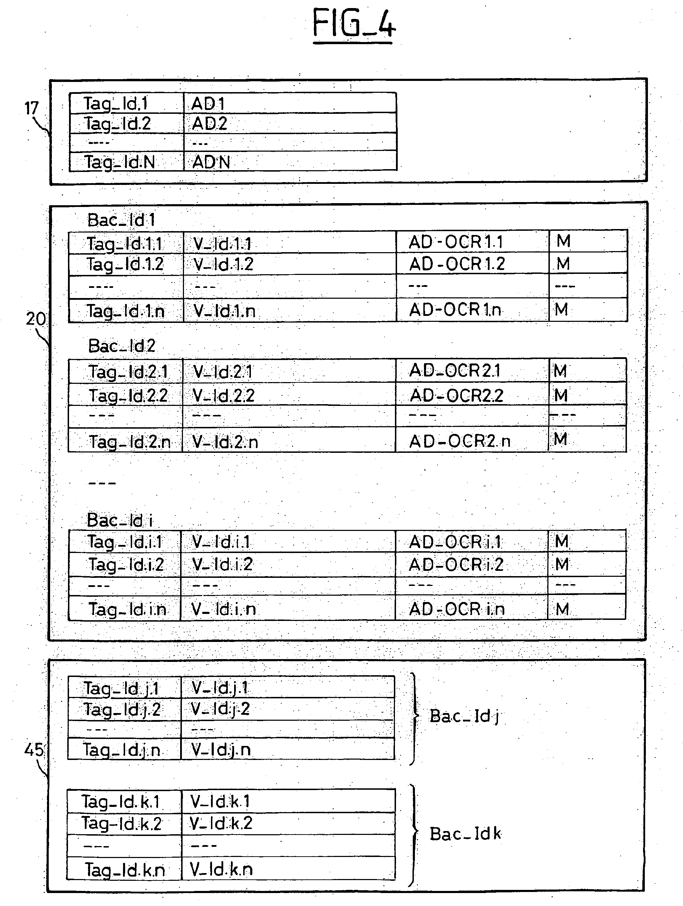

La figure 4 illustre de façon très schématique la structure des enregistrements des bases de données 17 et 20.

En particulier, pour la base de données 17, on a représenté plusieurs enregistrements dans chacun desquels un numéro temporaire d'envoi Tag-Id1,Tag-Id2,Tag-Idn, qui sert de clé d'accès, est enregistré en correspondance avec des données d'adresse AD1, AD2, Adn obtenues par une reconnaissance d'adresse par OCR complétée le cas échéant par un codage vidéo VCS.

On a représenté sur la figure 4 la base de données 20 sous une forme structurée qui consiste ici en un ensemble de tables identifiées chacune par un identifiant logique de bac Bac-Id1, Bac-Id2, Bac-Idi. Chaque table identifiée par Bac-Id contient un ensemble d'enregistrements correspondant respectivement à des envois contenus dans un bac de sortie de tri. Chaque enregistrement d'une table contient ici le numéro temporaire affecté à un envoi Tag-Id1.1, ..., Tag-Idi.n, l'empreinte numérique V-Id1.1 de l'envoi, ...., V-Idi.n, et les données d'adresse AD-OCR1.1, ...., AD-OCRi.n de l'envoi obtenues exclusivement par une reconnaissance automatique. On a fait figurer dans chaque enregistrement d'une table, un champ supplémentaire indiqué par M qui sert de marqueur dans le déroulement du procédé selon l'invention comme expliqué plus bas. Il faut comprendre que le découpage des tables 17 et 20 illustrées sur la figure 4 n'est donné qu'à titre d'exemple non limitatif.

La figure 5 représente les étapes du procédé selon l'invention lors d'une seconde passe de tri des envois.

A l'étape 41, les envois triés contenus dans les bacs de sortie de tri de la première passe de tri sont renvoyés en entrée de la machine de tri 1 et des bacs vides sont introduits dans les sorties de tri de la machine 1.

Lors de la seconde passe de tri, le procédé selon l'invention exploite la base de données 20 et une autre base de données temporaire indiquée par 45 sur les figures 4 et 5 qui contient des empreintes numériques V-Id formant l'espace d'exploration indiqué par BR-RV-Id pour la recherche d'une concordance entre deux empreintes numériques comme décrit, ci-après. Cette base de données temporaire 45 est initialisée dans l'étape 41 et ne contient à ce stade de début de la seconde passe de tri aucun enregistrement.

Dans l'étape 42, les envois dans le magasin de la machine de tri sont dépilés pour passer en série devant la caméra 3. On forme de nouveau une image de la surface de chaque envoi comportant l'information d'adresse A et dans l'étape 43, on dérive de cette image pour un envoi courant une empreinte numérique V-Id.

Dans le procédé selon l'invention, à l'étape 43 on effectue également une reconnaissance automatique d'adresse par OCR à partir de l'image de l'envoi courant pour obtenir de nouveau par OCR des données d'adresse représentatives de l'adresse de l'envoi courant.

Dans l'étape 44, on recherche une concordance entre l'empreinte numérique de l'envoi courant et les empreintes numériques enregistrées dans la base 45. Comme indiqué plus haut, au démarrage de la seconde passe de tri, la base 45 est vide ce qui fait que pour le premier envoi courant, à l'étape 44 on ne trouve aucune concordance entre deux empreintes numériques. Si aucune concordance n'est trouvée dans l'étape 46 à la suite de l'étape 44, le processus se poursuit à l'étape 47 où on détermine si la reconnaissance automatique d'adresse par OCR effectuée à l'étape 43 a réussi. En pratique, on pourra par exemple considérer que la reconnaissance automatique d'adresse par OCR effectuée à l'étape 43 a réussi si on a obtenu un code d'acheminement et un code de distribution qui constituent les données d'adresse enregistrées dans la base 20.

Dans le cas où dans l'étape 47, on détecte que la reconnaissance automatique d'adresse par OCR n'a pas réussi dans l'étape 43, on contrôle dans l'étape 48 si l'envoi postal courant peut être mis en attente. On pourra considérer dans un premier temps qu'un envoi postal peut être mis en attente de traitement seulement sur une période de temps définie, par exemple sur une période de temps de 10 secondes et qu'au delà de cette période de temps, l'envoi postal mis en attente doit être mis en rejet (étape 51 indiquée par REJET sur la figure 5).

Si à l'étape 48, l'envoi courant peut être mis en attente, à l'étape 49 on maintient en mémoire un identifiant logique de l'envoi, par exemple le Tag-Id, dans une liste d'attente 50.

Maintenant si à l'étape 47, on a détecté que la reconnaissance automatique d'adresse par OCR a réussi dans l'étape 43, alors dans l'étape 52 on recherche une concordance entre les données d'adresse AD-OCR de l'envoi courant et les données d'adresse AD-OCR enregistrées dans la base de données 20 pour identifier dans la base 20 un ou plusieurs enregistrements pour lequel ou pour lesquels on détecte une concordance, on identifie ces enregistrements en modifiant l'état de leur marqueur M et on comptabilise pour chaque bac de sortie de tri dans la base 20, les occurrences pour lesquelles on obtient une concordance entre des données d'adresse.

A l'étape 53, si on ne détecte pas dans la base 20 un nombre suffisant d'occurrences marquées pour un bac de sortie de tri, l'envoi postal courant peut être mis en attente à l'étape 49. Si à l'étape 53, on détecte par contre dans la base que pour un bac de sortie de tri, on a un nombre d'occurrences marquées supérieur à un certain seuil, par exemple trois occurrences pour un même bac, alors dans l'étape 54, on charge dans la base 45 (base de données BD-RV-Id) tous les enregistrements de ce bac de sortie de tri dans la base données 20, ces enregistrements définissant alors l'espace d'exploration pour la recherche d'une concordance entre deux empreintes numériques.

Sur la figure 4, on a représenté la structure de l'espace d'exploration d'empreintes constitué par la base de données 45 qui est formée par les empreintes d'envois postaux du bac indiqué par Bac-Idj. On a illustré sur la figure 4, pour le bac Bac-Idj par exemple, trois enregistrements comportant chacun l'empreinte numérique V-Id.j.1,V-Id.j.2,V-Id.j.n d'un envoi et l'identifiant Tag-Id.j.1,Tag-Id.j.2,Tg-Idj.n pour les envois 1 à n du bac. En pratique, chaque bac de tri peut contenir quelques dizaines d'envois, par exemple une cinquantaine d'envois ce qui représente l'horizon (profondeur) de l'espace d'exploration. Dans le procédé selon l'invention, l'espace d'exploration peut être formé par les empreintes numériques V-Id des envois de plus d'un bac, par exemple deux bacs comme illustré sur la figure 4 avec les enregistrements du bac indiqué par Bac-Idk. Dans ce cas, on augmente la dimension de l'espace d'exploration mais on augmente la probabilité d'obtenir une concordance d'empreintes pour des situations où plusieurs bacs de sortie de tri en première passe de tri ont été vidés dans le magasin d'alimentation de la machine sans respect de séquence des plis avant de démarrer la seconde passe de tri.

On peut prévoir dans ce cas dans l'étape 54, un renouvellement partiel de la base de données 45 en remplaçant par exemple les empreintes des envois du bac le plus ancien dans la base 45 par les empreintes des envois d'un bac pour lequel on vient de détecter un franchissement du seuil de comptage d'occurrences. On remplace donc à chaque mise à jour de la base de données 45, les empreintes pour les envois d'un bac sur deux.

A l'étape 55, si la liste des envois en attente 50 n'est pas vide, on balaie en priorité cette liste en procédant pour chaque envoi en attente indiqué dans la liste, aux étapes 44 et 46 comme pour un envoi courant. Normalement, à l'étape 46, on détecte une concordance entre l'empreinte numérique d'un envoi (récupérée de la liste d'attente 50) et l'une des empreintes numériques enregistrées dans l'espace d'exploration 45. A partir de l'association entre l'empreinte trouvée dans l'espace d'exploration 45 et l'identificateur Tag-Id, on récupère dans la base de données 17 les données d'adresse AD pour l'envoi considéré (étape 56) et on envoie l'envoi vers une sortie de tri correspondante (étape 57). Dans l'étape 58, on procède à une réduction de l'horizon de l'espace d'exploration en mettant à jour la base de données 45 par marquage de l'enregistrement qui correspond à l'empreinte numérique trouvée dans l'étape 46 pour une suppression possible. On procède également à une mise à jour de la base de données 20 en initialisant les marqueurs 20 dans les enregistrements correspondants aux bacs qui ne sont pas chargés dans la base de données 45 à l'étape 54. Le cas échéant, on met à jour la liste d'attente 50 par suppression de l'identifiant Tag-Id qui correspond à l'empreinte numérique trouvée dans l'étape 46.

Comme indiqué plus haut, on procède à l'étape 44 en priorité au traitement des envois mis en attente dans la liste d'attente 50. Si à l'étape 46, on ne détecte pas de concordance pour cet envoi courant, cet envoi courant peut être directement mis de nouveau en attente dans l'étape 49. Dans l'étape 49, si on détecte qu'un envoi est mis en attente un nombre de fois supérieur à un certain seuil, on peut procéder à la mise en rejet de l'envoi (traitement manuel de l'étape 51).

A la suite de l'étape 58, le processus boucle sur l'étape 42 pour le traitement d'un envoi subséquent de la liste d'attente 50 ou d'un autre envoi.

Si la seconde passe de tri est réalisée sur une autre machine de tri telle que 10, à l'étape 41 on transférera la base de données 20 constituée dans la machine 1 vers le système 9.

Comme indiqué plus haut, le procédé selon l'invention résiste à des perturbations de l'ordre des envois en seconde passe de tri suite à un transbordement de bacs ou à une rupture de séquence par exemple.

## Revendications

1. Procédé de traitement d'envois postaux dans une machine de tri (1 ;10) ayant des sorties de tri avec des bacs de sortie de tri (5) dans lesquels sont dirigés les envois (P) lors des passes de tri successives,
dans lequel lors d'une première passe de tri des envois postaux, on forme une image numérique de chaque envoi postal comportant une information d'adresse (12) pour reconnaître automatiquement l'adresse de l'envoi, on dérive de cette image une empreinte numérique (V-Id) qui est un identifiant logique pour l'envoi et on enregistre en mémoire (16) des données d'adresse (AD) représentatives de l'adresse de l'envoi reconnue automatiquement en correspondance avec l'empreinte numérique de l'envoi et un identifiant logique (Bac-Id) de bac de sortie de tri dans lequel est dirigé l'envoi,
et dans lequel lors d'une seconde passe de tri des envois postaux, on forme (42) de nouveau une image numérique d'un envoi courant comportant l'information d'adresse de l'envoi courant, on dérive (43) de cette image une empreinte numérique pour l'envoi courant et on recherche (44) parmi les empreintes numériques enregistrées en première passe de tri une concordance avec l'empreinte numérique de l'envoi courant,
**caractérisé en ce que** lors de la seconde passe de tri,
- on effectue également une reconnaissance automatique d'adresse à partir de l'image de l'envoi courant pour obtenir des données d'adresse (AD-OCR) représentatives de l'adresse de l'envoi courant,
- on recherche parmi les données d'adresse enregistrées en mémoire une concordance avec les données d'adresse de l'envoi courant (44) pour identifier, à partir des identifiants logiques de bac de sortie de tri, un bac courant de sortie de tri de première passe de tri auquel correspond l'envoi courant de sorte que pour rechercher une concordance entre deux empreintes numériques on effectue cette recherche de concordance d'empreintes numériques dans un espace d'exploration (45) formé par les empreintes numériques qui correspondent audit bac courant de sortie de tri.

2. Procédé selon la revendication 1, dans lequel pour identifier un bac courant de sortie de tri de première passe de tri, on comptabilise (52) pour des envois successifs des occurrences pour lesquelles on obtient une concordance entre des données d'adresse.

3. Procédé selon la revendication 2, dans lequel si on ne détecte pas de concordance entre l'empreinte numérique de l'envoi courant et les empreintes numériques formant l'espace d'exploration, on met en attente (49) l'envoi courant et on recommence la recherche de concordance d'empreintes numériques pour cet envoi courant après une mise à jour de l'espace d'exploration (54) avec des empreintes numériques qui correspondent à un autre bac de sortie de tri de première passe de tri.

4. Procédé selon la revendication 3, dans lequel on comptabilise le nombre de fois qu'un envoi courant est mis en attente (48) et on met en rejet l'envoi courant (51) si on détecte que le nombre de fois que cet envoi courant a été mis en attente est supérieur à un certain seuil.

## Claims

1. A method of handling mail items in a sorting machine (1; 10) having sorting outlets with sorting outlet bins (5) into which the mail items (P) are directed during successive sorting passes;
which method consists, during a first sorting pass for sorting the mail items, in taking a digital picture of each mail item bearing address information (12) for the purpose of automatically recognizing the address of the mail item, in deriving from said picture a digital fingerprint (V-ID) which is a logic identifier for the mail item, and in recording (16) in a memory address data (AD) representing the automatically-recognized address of the mail item in correspondence with the digital fingerprint of the mail item and with a logic identifier (Bac-ID) of the sorting outlet bin into which the mail item is directed; and
during a second sorting pass for sorting the mail items, in taking (42), once again, a digital picture of a current mail item bearing address information for the current mail item, in deriving (43) from said picture a digital fingerprint for the current mail item, and in searching (44) among the digital fingerprints recorded during the first sorting pass for a match with the digital fingerprint of the current mail item;
said method being **characterized in that**, during the second sorting pass, it further consists:
- in also performing automatic address recognition on the basis of the picture of the current mail item in order to obtain address data (AD-OCR) representing the address of the current mail item; and
- in searching among the address data recorded in the memory for a match with the address data of the current mail item (44) in order to identify, on the basis of the sorting outlet bin logic identifiers, a current sorting outlet bin from the first sorting pass to which the current mail item corresponds, so that, in order to search for a match between two digital fingerprints, said search for matching digital fingerprints is conducted in an exploration space (45) formed by the digital fingerprints that correspond to said current sorting outlet bin.

2. A method according to claim 1, in which, in order to identify a current sorting outlet bin from the first sorting pass, occurrences for which matching between address data is obtained are counted (52) for successive mail items.

3. A method according to claim 2, in which, if no matching is detected between the digital fingerprint of the current mail item and the digital fingerprints forming the exploration space, the current mail item is put on hold (49), and the search for matching digital fingerprints is started again for said current mail item after the exploration space has been updated (54) with digital fingerprints that correspond to another sorting outlet bin from the first sorting pass.

4. A method according to claim 3, in which the number of times a current mail item is put on hold (48) is counted and the current mail item (51) is rejected if it is detected that the number of times said current mail item has been put on hold is greater than a certain threshold.

## Patentansprüche

1. Verfahren für die Verarbeitung von postalischen Sendungen in einer Sortiermaschine (1; 10), die Sortieraufgänge mit Sortierausgangsbehältnissen (5), in welche die Sendungen (P) bei den aufeinanderfolgenden Sortierdurchläufen gerichtet werden, aufweist,
bei dem bei einem ersten Sortierdurchgang der postalischen Sendungen ein digitales Bild jeder postalischen Sendung gebildet wird, umfassend eine Adressinformation (12) zur automatischen Erkennung der Adresse der Sendung, wobei von diesem Bild ein digitaler Abdruck (V-Id) abgeleitet wird, der eine logische Identifizierende für die Sendung ist, und wobei für die Adresse der Sendung repräsentative Adressdaten (AD) in einem Speicher (16) gespeichert werden, die in Zusammenhang mit dem digitalen Abdruck der Sendung und einer logischen Identifizierenden (Bac-Id) des Sortierausgangsbehältnisses, in welchen die Sendung gerichtet wird, automatisch erkannt wurden,
und bei dem bei einem zweiten Sortierdurchgang der postalischen Sendungen erneut ein digitales Bild einer laufenden Sendung gebildet wird (42), umfassend die Adressinformation der laufenden Sendung, wobei von diesem Bild ein digitaler Abdruck für die laufende Sendung abgeleitet wird (43), und wobei unter den bei dem ersten Sortierdurchgang gespeicherten digitalen Abdrücken eine Konkordanz mit dem digitalen Abdruck der laufenden Sendung gesucht wird (44),
**dadurch gekennzeichnet, dass** während des zweiten Sortierdurchgangs
- zugleich eine automatische Adresserkennung, ausgehend von dem Bild der laufenden Sendung, durchgeführt wird, um für die Adresse der laufenden Sendung repräsentative Adressdaten (AD-OCR) zu erhalten,
- unter den in dem Speicher gespeicherten Adressdaten eine Konkordanz für die Adressdaten der laufenden Sendung gesucht wird (44), um ausgehend von logischen Identifizierenden der Sortierausgangsbehältnisse ein laufendes Sortierausgangsbehältnis des ersten Sortierdurchgangs zu identifizieren, dem die laufende Sendung entspricht, derart, dass zum Suchen einer Konkordanz zwischen den zwei digitalen Abdrücken diese Suche der Konkordanz digitaler Abdrücke in einem Explorationsraum (45) ausgeführt wird, der durch die digitalen Abdrücke gebildet ist, die dem laufenden Sortierausgangsbehältnis entsprechen.

2. Verfahren nach Anspruch 1, bei dem zur Identifikation eines laufenden Sortierausgangsbehältnisses des ersten Sortierdurchgangs für aufeinander folgende Sendungen die Fälle gezählt werden (52), für die eine Konkordanz zwischen den Adressdaten erhalten wird.

3. Verfahren nach Anspruch 2, bei dem, wenn keine Konkordanz zwischen dem digitalen Abdruck der laufenden Sendung und den den Explorationsraum bildenden digitalen Abdrücken ermittelt wird, die laufende Sendung in einen Wartezustand versetzt wird (49) und die Suche nach der Konkordanz digitaler Abdrücke für diese laufende Sendung nach einer Aktualisierung des Explorationsraums (54) mit digitalen Abdrücken, die einem anderen Sortierausgangsbehältnis des ersten Sortierdurchgangs entsprechen, erneut beginnt.

4. Verfahren nach Anspruch 3, bei dem die Anzahl Fälle, in denen eine laufende Sendung in Wartezustand versetzt wird (48), gezählt wird, und die laufende Sendung verworfen wird (51), wenn die erfasste Anzahl von Fällen, für den diese laufende Sendung in Wartezustand versetzt wurde, größer ist als ein bestimmter Schwellenwert.
